**Europäisches Patentamt**

(19) **European Patent Office**

**Office européen des brevets**

(11) Numéro de publication: **0 060 739**
**B1**

(12) **FASCICULE DE BREVET EUROPEEN**

(45) Date de publication du fascicule du brevet:
**16.05.84**

(51) Int. Cl.³: **H 01 G 4/32**, H 01 G 13/02

(21) Numéro de dépôt: **82400290.1**

(22) Date de dépôt: **18.02.82**

(54) Procédé de réalisation d'un condensateur bobiné, appareil pour la mise en oeuvre du procédé, et condensateur ainsi obtenu.

(30) Priorité: **27.02.81 FR 8103991**

(43) Date de publication de la demande:
**22.09.82 Bulletin 82/38**

(45) Mention de la délivrance du brevet:
**16.05.84 Bulletin 84/20**

(84) Etats contractants désignés:
**DE GB IT**

(56) Documents cités:
**FR - A - 2 091 309**
**FR - A - 2 379 895**
**GB - A - 821 419**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Bernard, Daniel, THOMSON-CSF SCPI 173, bld Haussmann, F-75360 Paris Cedex 08 (FR)**

(74) Mandataire: **Vesin, Jacques et al, THOMSON-CSF SCPI 173, Bld Haussmann, F-75379 Paris Cedex 08 (FR)**

BUNDESDRUCKEREI BERLIN

Procédé de réalisation d'un condensateur bobiné, appareil pour la mise en oeuvre du procédé
et condensateur ainsi obtenu

La présente invention concerne un procédé de réalisation d'un condensateur bobiné de capacité C, procédé dans lequel on enroule l'un sur l'autre au moins deux films de matériaux diélectriques métallisés, les couches métallisées constituant les armatures dudit condensateur, la capacité instantanée Cx du condensateur étant mesurée à chaque instant à l'aide de moyens de mesure de capacité, comme décrit dans le brevet FR-A-2 379 895. L'invention concerne aussi un condensateur bobiné obtenu par ledit procédé et également un appareil pour la mise en oeuvre dudit procédé comportant des moyens pour bobiner simultanément sur un mandrin deux films de matériaux diélectriques métallisés et des moyens de mesure de la capacité du condensateur au cours du bobinage ainsi que décrit dans le brevet FR-A-2 091 309.

Diverses méthodes sont connues pour réaliser les condensateurs bobinés à base de films diélectriques métallisés.

Une première méthode consiste à compter le nombre de tours réalisé et de stopper la machine après un nombre de tours prédéterminé. Toutefois, on constate qu'une telle méthode est très imprécise, donnant lieu à une très grande dispersion dans les capacités des condensateurs ainsi fabriqués. Une telle méthode ne convient généralement que pour les très fortes capacités pour lesquelles la précision relative de la valeur de la capacité reste malgré tout acceptable.

Une autre méthode connue consiste à enrouler simultanément les deux films diélectriques métallisés avec une machine comportant un pont de capacité qui suit l'évolution de la capacité du condensateur ainsi bobiné et stoppe la machine lorsque la valeur désirée est atteinte. Toutefois, cette méthode ne permet pas le bobinage en une seule fois des très fortes capacités, car alors la résistance de métallisation devient trop forte et fausse ainsi la mesure de la valeur de la capacité. Ce problème a été résolu en pratique en procédant en plusieurs étapes successives: par exemple, pour réaliser un condensateur dont la capacité est de 10 microfarads, on règle le pont de mesure sur 2 microfarads, on fait un premier enroulement de 2 microfarads, puis on démétallise une des deux armatures de manière à isoler ce début d'enroulement du reste du condensateur. On bobine ensuite à nouveau un nouvel enroulement de 2 microfarads par dessus le premier, et ainsi de suite jusqu'à l'obtention de la valeur désirée. De cette manière, la résistance due aux couches métallisées est beaucoup moins importante et on obtient ainsi une amélioration dans la précision relative des condensateurs ainsi réalisés. Il faut en effet préciser que la mesure de la capacité en cours de bobinage ne peut s'effectuer bien entendu sur les connexions latérales de schoopage comme c'est le cas sur un condensateur terminé, puisque celles-ci n'ont pas encore été réalisées à ce stade du procédé. Par conséquent, la mesure de la capacité s'effectue généralement à l'aide de 2 rouleaux conducteurs disposes au contact des couches métallisées de chacun des deux films diélectriques juste avant leur enroulage. Par conséquent, la résistance de chaque couche métallisée intervient de façon importante puisqu'une partie du courant alternatif servant à la mesure de ladite capacité se propage jusqu'à l'extrémité de chaque film diélectrique métallisé qui peut présenter une longueur de plusieurs centaines de mètres.

La deuxième méthode décrite ci-dessus ne donne toutefois pas entièrement satisfaction pour les petites valeurs de capacité, car la variation de capacité linéique est dans ce cas importante, tandis que la précision mécanique de la machine est imparfaite (par variation de capacité linéique, on entend la variation de capacité par unité de longueur de bobinage de film). Ces deux facteurs entraînent donc encore une dispersion non négligeable dans les valeurs des capacités des condensateurs ainsi réalisés.

Le procédé selon l'invention permet d'éviter ces inconvénients. Dans ce but, le procédé selon l'invention est caractérisé en ce que, lorsque la capacité Cx est voisine mais inférieure à C, on réalise une démétallisation partielle de l'un des films de matériaux diélectriques métallisés, de manière a maintenir sur celui-ci dans la direction de bobinage une bande métallisée, de largeur inférieure à celle du matériau diélectrique, électriquement reliée à l'armature correspondante du condensateur et permettant d'ajuster précisément la valeur de la capacité Cx à la valeur C, sans ralentir la vitesse de bobinage dudit condensateur.

Dans un tel procédé, en particulier lorsque la largeur de la bande métallisée restante est faible, l'augmentation de la capacité Cx du condensateur en cours de bobinage est donc extrèmement lente, quelle que soit la vitesse de bobinage utilisée. En effet, la valeur de la capacité dépendant notamment de la surface correspondante des armatures en regard l'une de l'autre, une faible augmentation de la surface de l'une de celles-ci se traduit par une faible augmentation de la capacité du condensateur. Lorsque la valeur C de la capacité désirée est atteinte, le bobinage est stoppé et, malgré l'imprécision mécanique de la machine, la variation de la capacité du condensateur par rapport à la valeur théorique sera donc extrèmement faible. De plus, on réduit la capacité linéique dudit condensateur, ce qui réduit corrélativement l'influence de la bande active qui, au moment où l'on décide de stopper le bobinage du condensateur, n'est pas encore dans celui-ci.

De préférence, la bande métallisée s'étendra sensiblement parallèlement aux bords du film diélectrique. Un tel mode de réalisation est en effet particulièrement simple à réaliser par exemple à l'aide d'un rouleau démétalliseur comportant deux parties électriquement conductrices séparées par une partie isolante de largeur correspondant à celle de la bande métallisée. On soumet la face métallisée du film diélectrique correspondant et les parties conductrices du rouleau démétalliseur à une différence de potentiel suffisante pour que lors du passage dudit film métallisé au contact dudit rouleau, les parties en regard des parties conductrices du rouleau soient démétallisées. De préférence, afin de donner une meilleure efficacité au procédé, le rouleau démétalliseur sera mis en rotation dans le sens opposé au sens de défilement du film à démétalliser. Cette vitesse de rotation peut être réglée dans une large mesure, mais elle sera de préférence relativement élevée par rapport à la vitesse de défilement dudit film.

La bande métallisée de faible largeur, disposée parallèlement aux bords du film diélectrique sera à une distance minimum de ceux-ci qui dépend du matériel utilisé! Il est en effet essentiel que cette bande métallisée soit toujours au-dessus de la partie métallisée de l'autre film constituant le condensateur pour que sa contribution à la valeur de la capacité soit réellement efficace. C'est pourquoi, il sera préférable de disposer cette bande métallisée de faible largeur sensiblement à égale distance des bordures dudit film diélectrique.

Par ailleurs, compte tenu du fait que les condensateurs bobinés comportent toujours un certain nombre de tours »morts«, il est prévu, sur un signal de pont de mesure, de démétalliser complètement l'un des films diélectriques métallisés lorsque la valeur de capacité est atteinte. Dans ce but, les rouleaux démétalliseurs total et partiel peuvent être disposés sur un barillet qui pivote de l'un à l'autre suivante le type de démétallisation à réaliser et qui se relève lorsque ni l'une ni l'autre des opérations ne sont nécessaires.

Suivant une variante de réalisation permettant d'ajuster encore mieux la valeur de la capacité, on dispose le rouleau démétalliseur total au-dessus du cylindre bobiné, le rouleau démétalliseur partiel étant lui disposé en amont. Lorsque la valeur exacte de capacité est atteinte, le rouleau démétalliseur total s'abaisse et supprime ainsi la partie de film métallisé de faible largeur située entre les rouleaux démétalliseurs partiel et total, ce qui augmente donc la précision de la valeur de capacité.

L'invention sera mieux comprise à l'aide des exemples de réalisation suivants donnés à titre non limitatif, conjointement avec les figures qui représentent:

— la fig. 1, un appareil de mise en oeuvre du procédé selon l'invention,
— la fig. 2, une vue des deux films métallisés constituant le condensateur bobiné, le film supérieur possédant une partie démétallisée conformément à l'invention,

— la fig. 3, une vue d'un condensateur bobiné selon l'invention avant réalisation des connexions latérales de schoopage et enrobage de l'ensemble,
— la fig. 4, une variante de réalisation de la fig. 1 avec les rouleaux démétalliseurs situés à l'extérieur du condensateur bobiné.

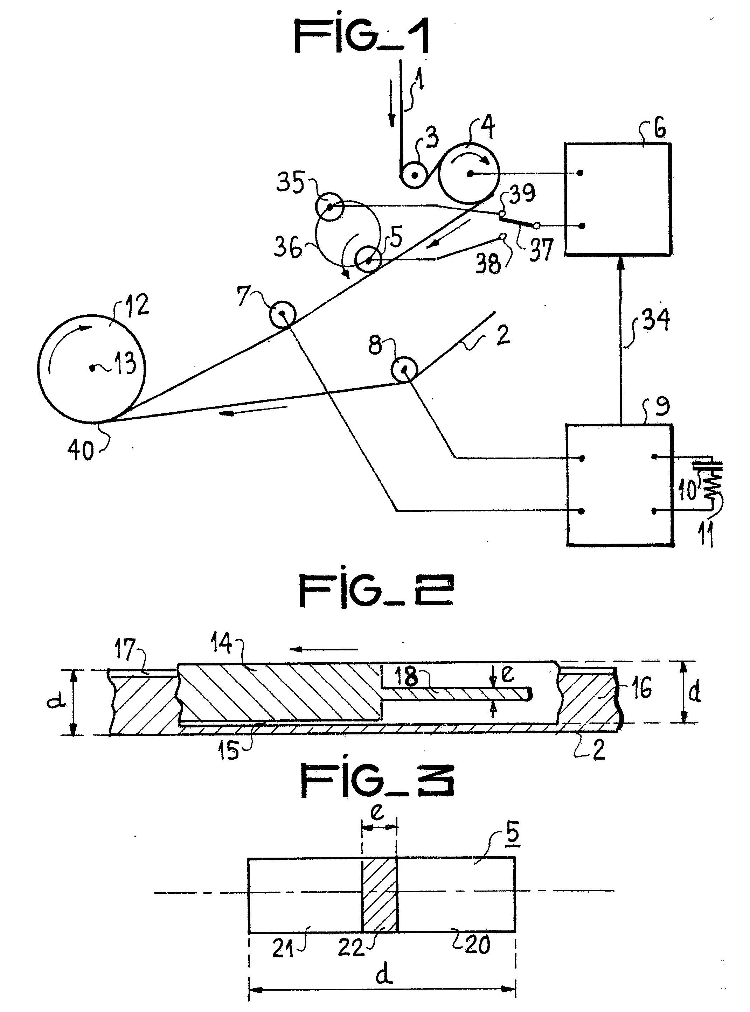

Sur la fig. 1, les deux films de matériaux diélectriques métallisés 1 et 2 constituant un condensateur bobiné défilent dans le sens des flèches mentionnées sur cette figure et sont bobinés simultanément pour former un condensateur bobiné 12. Le film supérieur 1 passe successivement au contact d'un premier rouleau d'embarrage 3 et d'un second rouleau d'embarrage 4 avant d'être bobiné sur le mandrin 13. Ce second rouleau d'embarrage 4 réalisé en un matériau conducteur de l'électricité est utilisé également pour porter la couche métallisée du film 1 à un potentiel de référence par exemple la masse, à l'aide de la source d'alimentation 6, dont l'autre pôle est relié via l'interrupteur inverseur 37 soit à la borne 38 et au rouleau démétalliseur partiel 5, soit à la borne 39 et au rouleau démétalliseur total 35. Ces deux rouleaux sont disposés sur un barillet 36. Ce barillet monte ou s'abaisse suivant les signaux envoyés via 34 à l'inverseur 37 ainsi qu'à des moyens de commande de barillet non représentés sur la figure. Un pont de mesure de capacité 9, bien connu de l'homme de l'art, est connecté d'une part aux deux rouleaux conducteurs 7 et 8 au contact des faces métallisées des films 1 et 2 de manière à mesurer la capacité du condensateur en cours de bobinage, et d'autre part à une capacité 10 en série avec une résistance 11. La capacité 10 correspond à la valeur C de la capacité que l'on désire réaliser, tandis que la résistance série 11 permet de compenser partiellement la résistance des couches métallisées crées par la mesure à l'aide des rouleaux 7 et 8.

Le fonctionnement d'un tel appareil se déduit assez aisément de la figure. Le pont de capacité 9 permet de contrôler à chaque instant la valeur approximative de la capacité $C_x$ du condensateur 12 en cours de bobinage. Pour une valeur $C_x$ de cette capacité, égale à $C - x\%$ de la valeur de C, le pont capacité 9 envoit un signal de commande via 34 à l'inverseur 37 qui bascule au contact de 38, tandis que le barillet 36 s'abaisse. Une différence de potentiel entre le rouleau 4 et le rouleau 5 s'établit, et par conséquent entre la surface métallisée du film 1 et le rouleau 5. Cette tension généralement continue, peut être de quelques volts seulement, suivant la vitesse de défilement du film métallisé 1 ainsi que de l'épaisseur de ladite couche métallisée. De préférence, on utilisera une tension de l'ordre de quelques dizaines de volts. Le rouleau démétaliseur 5, maintenu constamment en rotation dans le sens opposé au sens de défilement de film métallisé 1, réalise alors la démétallisation de celui-ci sur les parties en regard de ses parties conductrices. L'évolution de la valeur $C_x$ de la capacité s'effectue à partir de ce moment-là de façon beaucoup plus lente, ce qui permet un meilleur contrôle de celle-ci et de stopper la rotation du mandrin 13 lorsque la valeur C de la capacité est atteinte. Un signal est alors engendré par le pont capacitif 9 via 34 et l'inverseur 37 bascule au contact de 39 tandis que le barillet 36 pivote, appliquant le rouleau démétalliseur total 35 sur la surface métallisée du film 1. Après démétallisation totale de quelques unités de longueur, le mandrin 13 est stoppé, les films 1 et 2 coupés et l'opération peut recommencer.

Sur la fig. 2, est représentée une vue partielle des deux films métallisés 1 et 2, le film supérieur 1 possédant une bande métallisée 18 conforme à l'invention. De manière connue en soi, les films diélectriques 1 et 2, sont recouverts respectivement d'une couche métallisée 14 et 16 mais comportant respectivement sur l'une de leurs bordures des zones non métallisées 15 et 17. Ces zones non métallisées sont prévues afin d'éviter les court-circuits au cours des opérations de réalisation des connexions latérales de schoopage. Les films métallisés 1 et 2 sont sensiblement de même largeur d. Le film supérieur 1 possède une bande métallisée 18 de largeur e très inférieure à d. En règle générale, la largeur e variera entre 0,2 et 1 mm.

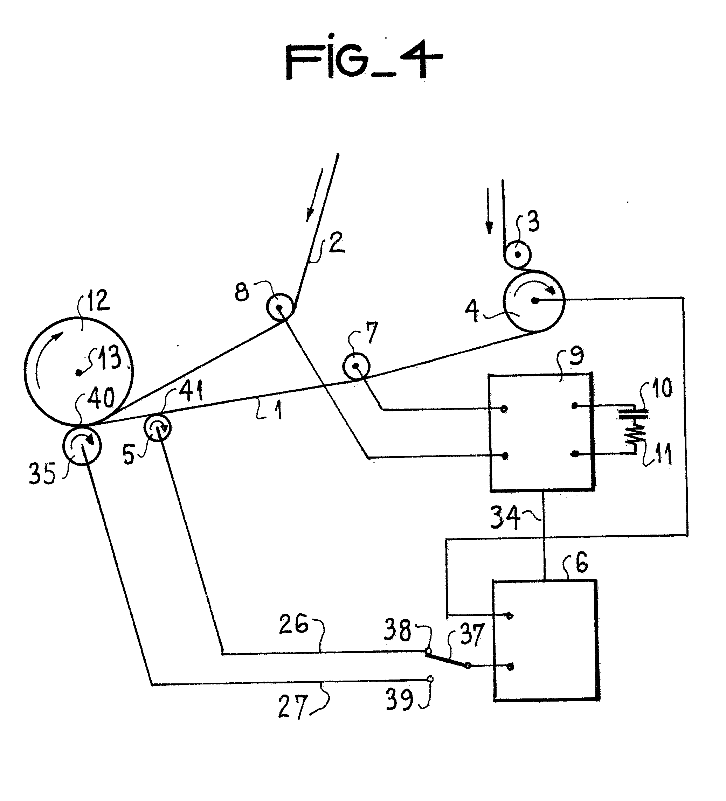

La fig. 3 représente une vue schématique du rouleau démétalliseur 5 de la fig. 1. Celui-ci a une largeur au moins égale à d et possède deux parties électriquement conductrices 20 et 21, séparées par une partie isolante 22. Pour faciliter le fonctionnement de l'appareil de la fig. 1, cette bande isolante 22 est de préférence située approximativement au centre du rouleau 5.

(Le rouleau démétalliseur total 35 n'est pas représenté sur une figure puisqu'il est simplement constitué par un rouleau complètement métallique.)

La fig. 4 représente une autre variante de réalisation de l'invention permettant d'obtenir une meilleure précision qu'avec le dispositif de la fig. 1.

En effet, sur la fig. 1, le film démétallisé partiellement entre 41 et 40 va être bobiné sur le mandrin 13 en fin de condensateur, suivi de plusieurs tours »morts« obtenus par démétallisation totale à l'aide du rouleau 35 du film 1. Toutefois, la contribution capacitivé apportée par cette portion 40, 41 en coopération avec le film 2 n'est pas mesurée par le pont 9 au moment où celui-ci engendre un signal de »fin de capacité«. Par conséquent, il existe une erreur d'autant plus importante que cette distance 40, 41 est grande. En pratique, on dispose le rouleau 5 le plus près possible du point 40, mais l'erreur subsiste malgré tout.

Sur la fig. 4, le dispositif représenté permet de supprimer toute erreur. Dans ce but, le rouleau démétalliseur total 35 est disposé sur le mandrin 13, sensiblement au point de contact des deux films métallisés 1 et 2 sur celui-ci (la surface métallisée des films 1 et 2 est donc dans ce cas, contrairement à celui de la fig. 1, dirigée vers le bas). Comme précédemment, les mêmes éléments portent les mêmes références. Lorsque l'interrupteur 37 est au contact de 38, le rouleau démétalliseur partiel 5 réalise une démétallisation telle que montrée sur la fig. 2. Lorsque le pont de mesure envoie un signal qui Commute 37 au contact de 39 (capacité C atteinte), le rouleau démétalliseur total 35 s'abaisse et la tension de la source 6 permet de démétalliser complètement le film 1. Par conséquent, la portion de film 1 disposée à cet instant entre 40 et 41 est alors démétallisée et le condensateur obtenu a donc exactement la valeur mesurée par le pont 9 à l'instant où le signal a été engendré.

## Revendications

1. Procédé de réalisation d'un condensateur bobiné de capacité prédéterminée C, dans lequel on enroule l'un sur l'autre au moins deux films (1, 2) de matériaux diélectriques métallisés, les couches métallisées (14, 16) constituant les armatures dudit condensateur, la capacité instantanée Cx du condensateur étant mesurée à chaque instant à l'aide de moyens de mesure de capacité (7, 8, 9), caractérisé en ce que, lorsque Cx est voisin mais inférieur à C, on réalise une démétallisation partielle de l'un des films de matériaux diélectriques métallisés, de manière à maintenir sur celui-ci dans la direction de bobinage une bande métallisée (18) de largeur inférieure à cette du matériau diélectrique, électriquement reliée à l'armature correspondante du condensateur et permettant d'ajuster précisément la valeur de la capacité Cx à la valeur C, sans ralentir la vitesse de bobinage dudit condensateur.

2. Procédé selon la revendication 1, caractérisé en ce que la bande métallisée (18) s'étand sensiblement parallèlement aux bords du film diélectrique.

3. Procédé selon la revendication 1 ou 2, caractérisé en ce que la bande métallisée (18) est disposée sensiblement au centre.

4. Procédé selon l'une des revendications 1 à 3, caractérisé en ce que l'opération de démétallisation est réalisée à l'aide d'un rouleau démétalliseur partiel (5) électriquement conducteur comportant une partie isolante correspondant à la bande métallisée qui reste sur le film diélectrique, ledit rouleau étant au contact de la partie métallisée du film diélectrique et étant porté à un potentiel suffisant, par rapport à celle-ci, pour démétalliser les parties en regard des zones électriquement conductrices.

5. Procédé selon l'une des revendications 1 à 4, caractérisé en ce que l'opération de démétallisation partielle est suivie par une opération de démétallisation totale dudit film, commandée par le pont de mesure de capacité (9).

6. Appareil de mise en oeuvre du procédé selon l'une des revendications précédentes, caractérisé en ce qu'il comporte des moyens pour bobiner simultanément sur un mandrin (13) deux films de matériaux diélectriques métallisés (1, 2), des moyens de mesure (9) de la capacité du condensateur au cours du bobinage ainsi qu'un rouleau démétalliseur partiel (5) possédant au moins une partie conductrice et une partie isolante, chaque partie conductrice étant reliée à l'un des pôles d'une source de tension (6) dont l'autre pôle est relié à un rouleau électriquement conducteur au contact de la couche métallisée du film (1) à démétalliser, ledit appareil comportant en outre des moyens pour mettre le rouleau (5) au contact dudit film (1) sous l'action d'un signal issu des moyens de mesure de capacité (9).

7. Dispositif selon la revendication 6, caractérisé en ce qu'il comporte également un rouleau démétalliseur total (35).

8. Dispositif selon l'une des revendications 6 ou 7, caractérisé en ce que le rouleau démétalliseur total (35) est disposé avec le rouleau démétalliseur partiel (5) sur un barillet (36).

9. Dispositif selon l'une des revendications 6 ou 7, caractérisé en ce que le rouleau démétalliseur total (35) est situé au point de contact (40) des deux films de matériaux diélectriques métallisés (1, 2) sur le mandrin (13).

10. Condensateur bobiné obtenu par le procédé selon l'une des revendications précédentes comportant une succession des spires de films de matériaux diélectriques métallisés, les couches métallisées des spires de rangs pair et impair étant respectivement reliées entre elle par des connexions électriques latérales, caractérisé en ce que certaines spires, de rang pair ou impair possèdent au moins une zone démétallisée laissant une bande métallisée (18) de faible largeur comparée à celle des couches métallisées des spires précédentes, ladite bande métallisée de faible largeur étant reliée électriquement à la couche métallisée.

**Patentansprüche**

1. Verfahren zur Herstellung eines Wickelkondensators vorbestimmter Kapazität C, bei welchem wenigstens zwei metallisierte Folien (1, 2) aus dielektrischem Material übereinandergewickelt werden, wobei die metallisierten Schichten (14, 16) die Beläge des Kondensators bilden, und die jeweilige Augenblickskapazität Cx des Kondensators jederzeit mittels einer Kapazitätsmeßeinrichtung (7, 8, 9) gemessen wird, dadurch gekennzeichnet, daß, wenn Cx an C angenähert, jedoch kleiner als C ist, eine teilweise Entmetallisierung einer der metallisierten Folien aus dielektrischem Material derart vorgenommen wird, daß auf ihr in Wickelrichtung ein metallisierter Streifen (18) verbleibt, dessen Breite geringer als die des dielektrischen Materials ist, der elektrisch mit dem entsprechenden Belag des Kondensators verbunden ist und der es ermöglicht, den Wert der Kapazität Cx auf den Wert C genau einzustellen, ohne die Wickelgeschwindigkeit des Kondensators zu verringern.

2. Verfahren nach Anspruch 1, dadurch gekennzeichnet, daß der metallisierte Streifen (18) sich im wesentlichen parallel zu den Rändern des dielektrischen Films erstreckt.

3. Verfahren nach Anspruch 1 oder 2, dadurch gekennzeichnet, daß der metallisierte Streifen (18) im wesentlichen in der Mitte angeordnet wird.

4. Verfahren nach einem der Ansprüche 1 bis 3, dadurch gekennzeichnet, daß der Arbeitsschritt der Entmetallisierung mittels einer elektrisch leitfähigen Rolle (5) zum teilweisen Entmetallisieren vorgenommen wird, welche einen isolierenden Teil enthält, der dem auf der dielektrischen Folie verbleibenden metallisierten Streifen entspricht, wobei diese Rolle mit dem metallisierten Teil des dielektrischen Films in Berührung ist und auf ein ausreichendes Potential gegenüber dieser gelegt wird, um diejenigen Teile zu entmetallisieren, welche sich gegenüber den elektrisch leitfähigen Zonen befinden.

5. Verfahren nach einem der Ansprüche 1 bis 4, dadurch gekennzeichnet, daß auf den Arbeitsschritt der teilweisen Entmetallisierung eine vollständige Entmetallisierung der Folie folgt, welche durch die Kapazitätsmeßbrücke (9) gesteuert wird.

6. Vorrichtung zur Durchführung des Verfahrens nach einem der vorstehenden Ansprüche, dadurch gekennzeichnet, daß sie Mittel zum gleichzeitigen Aufwickeln von zwei metallisierten Folien (1, 2) aus dielektrischem Material auf einem Kern (13), Mittel (9) zur Messung der Kondensatorkapazität im Verlauf des Aufwickelns sowie eine Rolle (5) zum teilweisen Entmetallisieren enthält, die wenigstens einen leitfähigen und einen isolierenden Teil aufweist, wobei jeder leitfähige Teil mit einem der Pole einer Spannungsquelle (6) verbunden ist, deren anderer Pol mit einer elektrisch leitfähigen Rolle verbunden ist, die mit der metallisierten Schicht der zu entmetallisierenden Folie (1) in Kontakt ist, wobei das Gerät ferner Mittel umfaßt, um die Rolle (1) unter Steuerung durch ein von der Kapazitätsmeßeinrichtung (9) abgegebenes Signal in Kontakt mit der Folie (1) zu bringen.

7. Vorrichtung nach Anspruch 6, dadurch gekennzeichnet, daß sie ferner eine Rolle (35) zum vollständigen Entmetallisieren umfaßt.

8. Vorrichtung nach Anspruch 6 oder 7, dadurch gekennzeichnet, daß die Rolle (35) zum vollständigen Entmetallisieren gemeinsam mit der Rolle (5) zum teilweisen Entmetallisieren auf einer Trommel (36) angeordnet ist.

9. Vorrichtung nach Anspruch 6 oder 7, dadurch gekennzeichnet, daß die Rolle (35) zum vollständigen Entmetallisieren an der Kontaktstelle (40) der beiden metallisierten Folien (1, 2) aus dielektrischem Material auf dem Kern (13) angeordnet ist.

10. Wickelkondensator, der durch das Verfahren nach einem der vorstehenden Ansprüche hergestellt ist, mit einer Aufeinanderfolge von Windungen aus metallisierten Folien aus dielektrischem Material, wobei die metallisierten Schichten der Windungen mit gerader und mit ungerader Ordnungszahl jeweils untereinander durch seitliche elektrische Verbindungen miteinander verbunden sind, dadurch gekennzeichnet, daß bestimmte Windungen mit gerader oder ungerader Ordnungszahl wenigstens eine entmetallisierte Zone aufweisen, in der ein metallisierter Streifen (18) verbleibt, dessen Breite gering verglichen mit der der metallisierten Schichten der vorausgehenden Windungen ist, wobei der metallisierte Streifen geringer Breite elektrisch mit der metallisierten Schicht verbunden ist.

## Claims

1. Method of making a wound capacitor of predetermined capacitance C in which at least two metallized films (1, 2) of dielectric material are wound on each other, the metallized layers (14, 16) forming the coatings of said capacitor, the instantaneous capacitance Cx of the capacitor being measured at each instant with the aid of the capacitance measuring means (7, 8, 9), characterized in that when Cx is near but less than C a partial demetallization of one of the metallized films of dielectric material is carried out so as to retain thereon in the winding direction a metallized strip (18) of width less than that of the dielectric material, electrically connected to the corresponding coating of the capacitor and permitting the precise adjustment of the value of the capacitance Cx to the value C without reducing the winding speed of the capacitor.

2. Method according to claim 1, characterized in that the metallized strip (18) extends substantially parallel to the edges of the dielectric film.

3. Method according to claim 1 or 2, characterized in that the metallized strip (18) is disposed substantially in the center.

4. Method according to one of claims 1 to 3, characterized in that the demetallization operation is effected with the aid of an electrically conductive roller (5) for the partial demetallization comprising an insulating portion corresponding to the metallized strip remaining on the dielectric film, said roller being in contact with the metallized portion of the dielectric film and brought to an adequate potential with respect to the latter to demetallize the portions opposite the electrically conductive zones.

5. Method according to one of claims 1 to 4, characterized in that the partial demetallization operation is followed by a complete demetallization operation of said film controlled by the capacitance measuring bridge (9).

6. Apparatus for carrying out the method according to one of the preceding claims, characterized in that it comprises means for the simultaneous winding of two metallized film (1, 2) of dielectric material on a core (13), means (9) for measuring the capacitance of the capacitor in the course of the winding and a partial demetallizing roller (5) which comprises at least one conductive portion and an insulating portion, each conductive portion being connected to one of the poles of a voltage source (6) of which the other pole is connected to an electrically conductive roller in contact with the metallized layer of the film (1) to be demetallized, said apparatus further comprising means for bringing the roller (5) into contact with said film (1) under the action of a signal emitted by the capacitance measuring means (9).

7. Apparatus according to claim 6, characterized in that it further comprises a roller (35) for the complete demetallization.

8. Apparatus according to one of claims 6 or 7, characterized in that the total demetallizing roller (35) is disposed with the partial demetallizing roller (5) on a drum (36).

9. Apparatus according to claim 6 or 7, characterized in that the total demetallizing roller (35) is located at the point of contact (40) of the two metallized films (1, 2) of dielectric material on the core (13).

10. Wound capacitor obtained by the method according to one of the preceding claims, comprising a succession of convolutions of metallized films of dielectric material, the metallized layers of the convolutions of even and odd order number being respectively connected together by lateral electric connections, characterized in that certain convolutions with even or odd number have at least one demetallized zone leaving a metallized strip (18) of small width compared with that of the metallized layers of the preceding convolutions, the metallized strip of small width being electrically connected to the metallized layer.

# FIG_1

# FIG_2

# FIG_3

# FIG_4